# EUROPÄISCHE PATENTANMELDUNG

(11) **EP 3 772 855 A1**
(43) Veröffentlichungstag der Anmeldung: **10.02.2021**
(21) Anmeldenummer: 20189544.8
(22) Anmeldetag: 05.08.2020
(51) Int. Cl.: H04N 21/418, H04N 21/658, H04N 21/472

(54) **WIEDERGABEVORRICHTUNG, SYSTEM UND DATENSERVER**

(30) Priorität: 06.08.2019 DE 202019104316 U; 03.03.2020 DE 102020105624
(71) Anmelder: Tiger Media Deutschland GmbH, 20355 Hamburg (DE)
(72) Erfinder: Weitendorf, Till, 20144 Hamburg (DE)
(74) Vertreter: Lemcke, Brommer & Partner Patentanwälte Partnerschaft mbB

(57) **Zusammenfassung**

Die Erfindung betrifft eine Wiedergabevorrichtung für digitale Medieninhalte, umfassend ein Lese-/Ausgabegerät, einen Identifikationsträger (11), bei dem das Lese-/Ausgabegerät mit einem Datenserver verbunden oder verbindbar ist und bei dem das Lese-/Ausgabegerät ausgebildet ist, zumindest eine auf dem Identifikationsträger (11) gespeicherte Information zu lesen und an einen Datenserver zu übermitteln, wobei abhängig von einer Überprüfung der Information eine Freigabe von digitalen Medieninhalten auf dem Datenserver erfolgt. Wesentlich ist, dass der Identifikationsträger (11) als Blanko-Identifikationsträger ausgebildet ist, indem durch einen Benutzer mittels Verknüpfung der zumindest einen auf dem Identifikationsträger gespeicherten Information mit auf dem Datenserver auswählbaren digitalen Medieninhalten freizugebende digitale Benutzer-Medieninhalte für die Übertragung an das Lese-/Ausgabegerät zuweisbar und/oder änderbar sind.

## Beschreibung

Die Erfindung betrifft eine Wiedergabevorrichtung für digitale Medieninhalte nach dem Oberbegriff des Anspruchs 1, ein System für einen gesteuerten Zugriff auf digitale Medieninhalte nach dem Oberbegriff des Anspruchs 4, ein System nach dem Oberbegriff des Anspruchs 12 sowie einen Datenserver zur Speicherung, Freigabe und Verwaltung digitaler Medieninhalte nach dem Oberbegriff des Anspruchs 14.

Zum Abspielen von Medien wie Musik, Filmen oder Hörbüchern sind beispielsweise CD-Spieler, DVD-Player oder mp3-Player bekannt. Diese Geräte können speziell kindgerecht ausgestaltet sein, um die Bedienung durch Kinder zu erleichtern.

Aus dem Stand der Technik sind weitere Abspielvorrichtungen bekannt, die insbesondere Kindern einen einfachen Zugriff auf digitale Medien ermöglichen sollen. Beispielsweise ist in der DE 10 2011 056 420 A1 eine Vorrichtung beschrieben, die es erlaubt, Medien mittels RFID-Technologien zu identifizieren. Die RFID-Chips sind dazu in speziell hierfür konstruierten Gegenständen verbaut. Dadurch ist das Vorgehen relativ aufwendig und die entsprechende Vorrichtung teuer. Darüber hinaus sind insbesondere Kinder von der Fülle der verfügbaren digitalen Medieninhalte in üblichen Mediatheken überfordert, während gleichzeitig Eltern nicht im Detail ihren Kindern die zu konsumierenden Medien vorgeben wollen, jedoch in einem größeren Rahmen Kontrolle benötigen, dass Kinder nicht mit unangebrachten Medieninhalten in Kontakt kommen.

Der vorliegenden Erfindung liegt daher die Aufgabe zugrunde, eine Wiedergabevorrichtung, einen Datenserver sowie ein System für einen gesteuerten Zugriff auf digitale Medieninhalte zu schaffen, mit denen Eltern die Auswahl verfügbarer digitaler Medieninhalte für ihre Kinder bestimmen können. Dabei sollen die digitalen Medieninhalte gestaltbar und auswechselbar sein.

Diese Aufgabe wird gelöst durch eine Wiedergabevorrichtung mit den Merkmalen des Anspruchs 1. Vorteilhafte Weiterbildungen der erfindungsgemäßen Wiedergabevorrichtung finden sich in den Ansprüchen 2 und 3. Weiter gelöst wird diese Aufgabe durch ein System mit den Merkmalen des Anspruchs 4 oder des Anspruchs 12. Vorteilhafte Ausgestaltungen eines erfindungsgemäßen Systems finden sich in den Ansprüchen 5 bis 11 sowie 13. Auch der erfindungsgemäße Datenserver gemäß Anspruch 14 löst die erfindungsgemäße Aufgabe. Weitere vorteilhafte Ausgestaltungen des erfindungsgemäßen Datenservers finden sich in den Ansprüchen 15 bis 18.

Zur Vermeidung von Wiederholungen werden diese Ansprüche hiermit explizit per Referenz in die Beschreibung aufgenommen.

Eine erfindungsgemäße Wiedergabevorrichtung für digitale Medieninhalte umfasst, wie an sich bekannt, ein Lese-/Ausgabegerät und einen Identifikationsträger, wobei das Lese-/Ausgabegerät mit einem Datenserver verbunden oder verbindbar ist und ausgebildet ist, zumindest eine auf dem Identifikationsträger gespeicherte Information zu lesen und an einen Datenserver zu übermitteln. Abhängig von dem Ergebnis einer Überprüfung der Information auf dem Datenserver erfolgt eine Freigabe von digitalen Medieninhalten auf dem Datenserver an die Wiedergabevorrichtung.

Wesentlich ist, dass der Identifikationsträger als Blanko-Identifikationsträger ausgebildet ist, in dem durch einen Benutzer mittels Verknüpfung der zumindest einen auf dem Identifikationsträger gespeicherten Information mit auf dem Datenserver auswählbaren digitalen Medieninhalten freizugebende digitale Benutzer-Medieninhalte für die Übertragung an das Lese-/Ausgabegerät zuweisbar sind.

Der Begriff "Blanko-Identifikationsträger" umfasst in diesem Kontext auch solche Identifikationsträger, bei denen die auf dem Identifikationsträger gespeicherte Information auf dem Datenserver anfänglich bereits mit bestimmten digitalen Medieninhalten verknüpft ist, wobei der auf dem Identifikationsträger gespeicherte Information anschließend andere digitale Benutzer-Medieninhalte für die Übertragung an das Lese-/Ausgabegerät zuweisbar sind. Der Blanko-Identifikationsträger muss also in einem Anfangszustand nicht "leer" sein, sondern die darauf gespeicherte Information kann bereits mit bestimmten digitalen Medieninhalten verknüpft sein. Diese Verknüpfung ist änderbar.

Bevorzugt nimmt der Benutzer die Änderung der Verknüpfung selbst vor, insbesondere über ein Web-Interface bzw. eine (Smartphone-)Applikation (App), bevorzugt (auch) mobil.

Beispielsweise kann der Identifikationsträger als eine (Spielzeug-)Figur ausgebildet und im Anfangszustand mit einer ersten zugehörigen Hörspielfolge einer Hörspielserie verknüpft sein, deren Hauptperson durch die Figur repräsentiert wird. Durch Änderung der Verknüpfung kann der Benutzer dann sukzessive auf weitere Folge der Hörspielserie zugreifen.

Dabei kann vorgesehen sein, dass der Benutzer für jede neue Verknüpfung bezahlen muss. Alternativ kann vorgesehen sein, dass eine Art Abonnement vorliegt, sodass die Änderung der Verknüpfung in einem durch das Abonnement bestimmten Rahmen kostenlos vornehmbar ist.

Bevorzugt ist zu jedem Zeitpunkt immer nur ein bestimmter Medieninhalt mit dem Identifikationsträger verknüpft; um einen anderen Medieninhalt abzuspielen, ist also vorab die Verknüpfung entsprechend zu ändern.

Die freigegebenen digitalen Medieninhalte können an die Wiedergabevorrichtung, insbesondere das Lese-/Ausgabegerät übertragen werden. Dabei liegt es sowohl im Rahmen der Erfindung, dass die digitalen Medieninhalte in einer Speichereinheit der Wiedergabevorrichtung speicherbar sind und insbesondere von einem Benutzer beliebig oft abgespielt werden können oder ohne Speicherung auf der Wiedergabevorrichtung direkt bei der Übertragung abgespielt werden (bekannt als Streaming).

Im Rahmen dieser Erfindung ist als Blanko-Identifikationsträger jeder Gegenstand zu verstehen, der eine Information aufweist, mit der der Blanko-Identifikationsträger eindeutig identifiziert werden kann. Bei einer ersten Weiterbildung der erfindungsgemäßen Idee ist diese Identifikations-Information zunächst nicht mit bestimmten vorgegebenen digitalen Medieninhalten verknüpft. Eine solche Verknüpfung erfolgt vielmehr erst durch einen Benutzer. Der Benutzer verknüpft die auf dem Identifikationsträger gespeicherte Information mit auf dem Datenserver auswählbaren digitalen Medieninhalten. Diese freizugebenden digitalen Benutzer-Medieninhalte bilden somit eine Untergruppe der auf dem Datenserver auswählbaren digitalen Medieninhalte.

Alternativ kann bei einer anderen Weiterbildung der erfindungsgemäßen Idee jedoch vorgesehen sein, dass der Blanko-Identifikationsträger in seinem Auslieferungs- oder Grundzustand bereits mit bestimmten digitalen Medieninhalten verknüpft ist, wie erwähnt, welche Verknüpfung der Benutzer später ändern kann.

Dabei liegt es im Rahmen der Erfindung, dass die Verknüpfung von dem Benutzer direkt auf dem Datenserver vorgenommen wird. Der Datenserver kann als Computer ausgebildet sein und/oder als Datenserver mit Computerfunktionalitäten, die eine Speicherung, Verwaltung, Freigabe und Bedienung von digitalen Medieninhalten ermöglichen. Im Rahmen dieser Beschreibung werden die Bezeichnungen Datenserver, Computer, Datenserver-Computer und Backend als Synonyme verwendet, soweit nicht anders angegeben. Vorzugsweise können die digitalen Medieninhalte von einem Benutzer über einen Computer oder ein Tablett bzw. Smartphone ausgewählt und freigegeben werden. Beispielsweise kann dies über eine App oder ein Online-Portal erfolgen.

Das erfindungsgemäße System für einen gesteuerten Zugriff auf digitale Medieninhalte umfasst, wie an sich bekannt, einen Datenserver, eine Computernetz-Verbindung, ein Lese-/Ausgabegerät und einen Identifikationsträger. Das Lese-/Ausgabegerät ist über die Computernetz-Verbindung mit dem Datenserver verbunden oder verbindbar, wobei der Datenserver digitale Medieninhalte bereithält. Weiter ist das Lese-/Ausgabegerät ausgebildet, zumindest eine auf dem Identifikationsträger gespeicherte Information zu lesen, und der Datenserver ist ausgebildet, digitale Medieninhalte an das Lese-/Ausgabegerät freizugeben, wobei die Freigabe der digitalen Medieninhalte abhängig von einer Überprüfung der auf dem Identifikationsträger gespeicherten Information erfolgt.

Wesentlich ist, dass der Identifikationsträger als Blanko-Identifikationsträger ausgebildet ist, und anhand der ausgelesenen Information des Blanko-Identifikationsträgers auf dem Datenserver eine Verknüpfung des Blanko-Identifikationsträgers mit digitalen Medieninhalten bzw. eine Änderung dieser Verknüpfung erfolgt, wobei eine Auswahl an freizugebenden digitalen Medieninhalten durch einen Benutzer aus den digitalen Medieninhalten auf dem Datenserver konfigurierbar ist.

In einer bevorzugten Ausführungsform der Erfindung ist der Datenserver ausgestaltet und eingerichtet, dass die freizugebenden Benutzer-Medieninhalte durch den Benutzer aus einer Vorauswahl von digitalen Medieninhalten auswählbar sind. Hierbei kann insbesondere entweder vorgesehen sein, dass der Benutzer für jede Auswahl/Verknüpfung separat ein Entgelt entrichtet.

Hierdurch ergibt sich der Vorteil, dass für verschiedene Benutzer verschiedene Untermengen von digitalen Medieninhalten zur Verfügung gestellt werden können. Mit einer solchen Vorauswahl können beispielsweise verschiedene Abo-Formen für Benutzer realisiert werden. Abhängig vom Umfang des Abos können verschiedene Umfänge an digitalen Medieninhalten zur Verfügung gestellt werden. Dadurch ist eine einfache Preisgestaltung möglich. Insbesondere kann vorgesehen sein, dass der Benutzer im Rahmen seines Abos für eine neue Verknüpfung nicht extra bezahlen muss.

Im Rahmen dieser Erfindung ist die Vorauswahl von digitalen Medieninhalten eine Untergruppe der auf dem Datenserver bereitgehaltenen digitalen Medieninhalte. Die digitalen Benutzer-Medieninhalte sind eine weitere Untergruppe der Vorauswahl von digitalen Medieninhalten.

In einer vorzugsweisen Ausführungsform der Erfindung ist der Blanko-Identifikationsträger als separates Objekt, insbesondere als Karte oder Spielzeug (siehe oben), ausgebildet. Es liegt jedoch ebenfalls im Rahmen der Erfindung, dass der Blanko-Identifikationsträger ein Alltagsgegenstand ist, da in einfacher Art und Weise auf allen Gegenständen eine Information angebracht werden kann, die durch das Lese-/Ausgabegerät detektiert werden kann.

Eine Ausgestaltung als Karte oder Spielzeug hat den Vorteil, dass der Blanko-Identifikationsträger somit als tatsächlicher Gegenstand gekauft, verschenkt, verliehen oder weiterverkauft werden kann. So kann der Gegenstand die mit ihm verknüpfbaren Medieninhalte symbolisieren, z.B. eine Hörspielserie.

In einer bevorzugten Ausführungsform der Erfindung weist der Blanko-Identifikationsträger einen NFC-Chip oder einen optischen Code wie beispielsweise einen QR-Code auf. Insbesondere bevorzugt weist der Blanko-Identifikationsträger einen NFC-Chip mit einer eindeutig zuordenbaren ID auf.

Vorzugsweise weist der Blanko-Identifikationsträger eine grafische Gestaltung passend zu dem mit diesem Blanko-Identifikationsträger auswählbaren digitalen Medieninhalten auf. Wird ein Blanko-Identifikationsträger beispielsweise zum Abspielen von mehrteiligen Audioinhalten genutzt, das heißt Audioinhalten, die aus mehreren Folgen bestehen, z.B. Hörspielserien, kann der Blanko-Identifikationsträger eine grafische Gestaltung aufweisen, die Elemente, wie beispielsweise Hauptfiguren, der mehrteiligen Audioreihe zeigt. Dadurch kann in einfacher Art und Weise sowohl für einen Käufer als auch für Benutzer, wie beispielsweise Kinder, dargestellt werden, welche Medieninhalte anhand des Blanko-Identifikationsträgers gehört oder gesehen werden können.

Vorzugsweise weist der Blanko-Identifikationsträger eine zweite, gespeicherte Bezahlinformation auf. Damit kann physisch auf dem Blanko-Identifikationsträger festgehalten werden, welche Bezahlmodi, wie beispielsweise Voll-Abo oder Teil-Abo, mit dem Blanko-Identifikationsträger oder auch Einmalzahlungen in Anspruch genommen werden können.

In einer alternativen Ausführungsform der Erfindung werden mit dem System zur Steuerung des Zugriffs auf digitale Medieninhalte folgende Schritte ausgeführt:
A Bereitstellen von digitalen Medieninhalten auf dem Datenserver;
B Verbinden des Lese-/Ausgabegerät mit dem Datenserver;
C Auslesen zumindest einer auf dem Identifikationsträger gespeicherten Information mittels des Lese-/Ausgabegeräts;
D Freigabe von digitalen Medieninhalten abhängig von einer Überprüfung der auf dem Identifikationsträger gespeicherten Information;

Wesentlich ist, dass der Identifikationsträger als Blanko-Identifikationsträger im weiter oben definierten Sinne ausgebildet ist, und die ausgelesene Information des Identifikationsträgers an den Datenserver übermittelt wird und auf dem Datenserver eine Verknüpfung des Blanko-Identifikationsträgers mit digitalen Benutzer-Medieninhalten erfolgt, welche digitalen Benutzer-Medieninhalten durch einen Benutzer auf dem Datenserver ausgewählt bzw. geändert werden. Letzteres sofern der Blanko-Identifikationsträger anfänglich bereits mit vorausgewählten Medieninhalten verknüpft war.

Vorzugsweise kann die (anfängliche) Verknüpfung des Blanko-Identifikationsträgers mit digitalen Benutzer-Medieninhalten geändert werden, indem der Benutzer auf dem Datenserver neue und/oder andere digitale Benutzer-Medieninhalte auswählt.

Der erfindungsgemäße Datenserver zur Speicherung, Freigabe und Verwaltung digitaler Medieninhalte für eine Wiedergabevorrichtung für digitale Medieninhalte ist ausgebildet, digitale Medieninhalten an ein Lese-/Ausgabegerät der Wiedergabevorrichtung freizugeben. Die Freigabe der digitalen Medieninhalte erfolgt abhängig von einer Überprüfung von einer durch die Wiedergabevorrichtung übermittelten Information an den Datenserver.

Wesentlich ist, dass der Datenserver ausgebildet und eingerichtet ist, anhand der übermittelten Information auf dem Datenserver auswählbare digitale Medieninhalte des Datenservers für die Übertragung an die Wiedergabevorrichtung freizugeben, wobei eine Auswahl an freizugebenden digitalen Benutzer-Medieninhalten durch einen Benutzer auf dem Datenserver konfigurierbar ist.

Dabei liegt es ebenfalls im Rahmen der Erfindung, dass der Datenserver dazu ausgebildet und eingerichtet ist, die digitalen Medieninhalte bzw. die digitalen Benutzer-Medieninhalte speicherbar das Lese-/Ausgabegerät zu übermitteln. Vorzugsweise ist das Lese-/Ausgabegerät ausgebildet und eingerichtet, die digitalen Medieninhalte bzw. die digitalen Benutzer-Medieninhalte zu speichern.

In einer bevorzugten Ausführungsform der Erfindung ist der Datenserver ausgestaltet und eingerichtet, anhand der durch den Benutzer ausgewählten digitalen Benutzer-Medieninhalten weitere digitale Medieninhalte freizugeben, vorzugsweise regelmäßig, insbesondere regelmäßig und zu einer auswählbaren Tageszeit. Hierdurch können regelmäßige Medienformate wie beispielsweise Nachrichten, eine Podcast-Reihe oder das Angebot einer täglichen Gute-Nacht-Geschichte realisiert werden.

In einer bevorzugten Weiterbildung der Erfindung ist der Datenserver ausgestaltet und eingerichtet, von einem Benutzer zur Verfügung gestellte digitale Medieninhalte als digitale Benutzer-Medieninhalte freizugeben. Ein möglicher Anwendungsfall ist hier, dass ein Benutzer selbst digitale Medieninhalte erstellt, indem beispielsweise Eltern eine Geschichte für ein Kind vorlesen und als digitale Mediendatei aufzeichnen. Die selbst erstellten digitalen Medieninhalte können dann von dem Benutzer auf den Datenserver hochgeladen werden. Die selbst erstellten digitalen Medieninhalte stehen dann genauso wie käuflich zu erwerbende digitale Medieninhalte in der Auswahl digitaler Medieninhalte zur Verfügung und können als digitale Benutzer-Medieninhalte für die Wiedergabe mit der Wiedergabevorrichtung freigeschaltet werden.

Weitere vorteilhafte Ausführungsformen der Erfindung ergeben sich aus den nachstehend beschriebenen Ausführungsbeispielen, welche anhand von Zeichnungen beschrieben werden. Dabei zeigt:
- Figur 1: ein Ablaufdiagramm eines in dem erfindungsgemäßen System ablaufenden Verfahrens für die Steuerung des Zugriffs auf Medieninhalte,
- Figur 2: eine schematische Darstellung einer Ausführungsform eines BlankoIdentifikationsträgers.

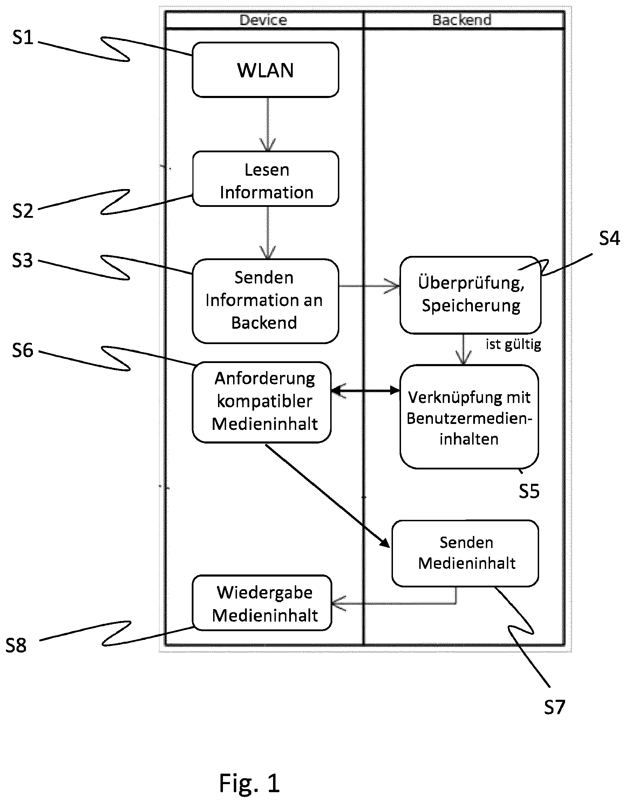

Figur 1 zeigt die wesentlichen Abläufe zur Zugriffssteuerung auf Medieninhalte auf dem Datenserver.

Das Lese-/Ausgabegerät ist in Schritt S1 über das Internet oder einem vergleichbaren Computernetz (sog. WLAN Onboarding) mit dem Datenserver (Backend) verbunden.

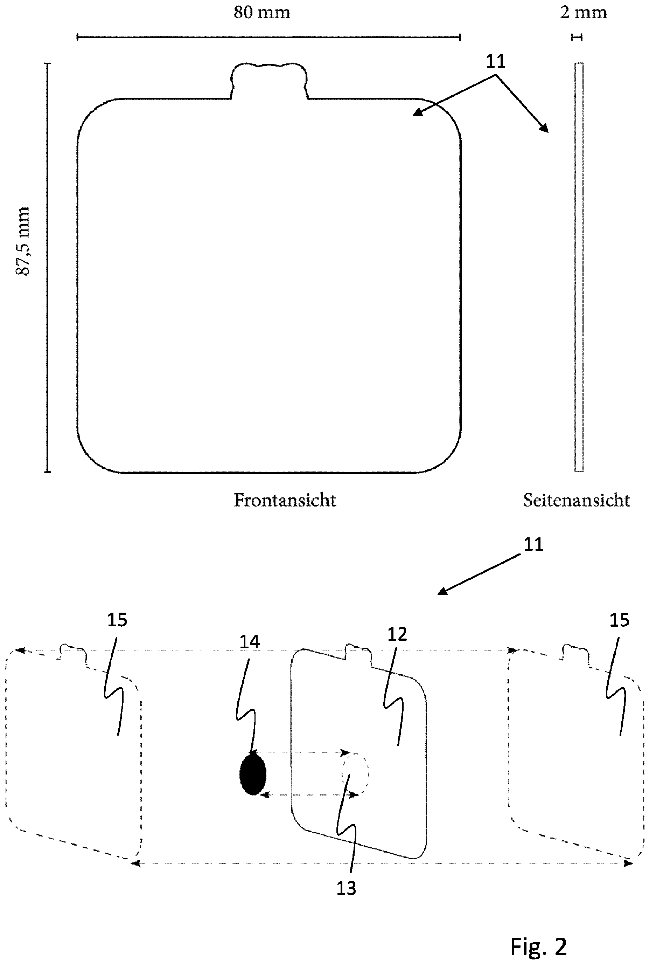

In Schritt S2 wird die auf dem Blanko-Identifikationsträger 11 gespeicherte Information, vorliegend Code-Daten auf der NFC Karte, mittels des Lese-/Ausgabegeräts gelesen. Vorliegend wird dazu der Blanko-Identifikationsträger in Form einer Karte (vgl. Figur 2) in die Wiedergabevorrichtung gesteckt. Die Wiedergabevorrichtung ist vorliegend mit allen wesentlichen Merkmalen der Tigerbox® der Anmelderin ausgebildet.

Die Code-Daten auf der NFC Karte werden gescannt. Der Blanko-Identifikationsträger 11 weist mit der auf dem Identifikationsträger gespeicherte Information, eine Identifikationsmöglichkeit auf, mit der jeder einzelne Blanko-Identifikationsträger 11 eindeutig identifiziert werden kann.

Diese Information ist im Backend gespeichert und wird beim erstmaligen Aktivieren des Blanko-Identifikationsträgers 11 in der Wiedergabevorrichtung an das Backend übermittelt S3. Durch diese Übermittlung S3 wird ein eindeutig identifizierbarer Blanko-Identifikationsträger 11 mit einem Benutzerkonto auf dem Datenserver verknüpft, indem die auf dem Identifikationsträger gespeicherte Information auf dem Datenserver überprüft und gespeichert wird S4.

Es kann vorgesehen sein, dass der Blanko-Identifikationsträger 11 bzw. eine Identifikationsmöglichkeit bereits im Auslieferungsstatus des Blanko-Identifikationsträgers 11 mit einem bestimmten Medieninhalt verknüpft ist, z. B. der ersten Folge einer Hörspielserie.

Soll nun durch einen Benutzer dem Blanko-Identifikationsträger 11 ein Medieninhalt zugewiesen werden oder eine entsprechende Zuweisung geändert werden, wird die auf dem Datenserver gespeicherte Information des Blanko-Identifikationsträgers 11 mit dem entsprechenden (neuen) Medieninhalt verknüpft S5. Dies erfolgt vorliegend indem ein Benutzer über einen Computer oder ein Tablett bestimmte Medieninhalte auswählt und freigibt. Beispielsweise kann dies über eine App oder ein Online-Portal erfolgen.

Steht der Blanko-Identifikationsträger 11 in Wechselwirkung mit der Wiedergabevorrichtung, wird vom Datenserver der entsprechende Medieninhalt freigegeben. Zum Starten der Widergabe durch den Bediener wird der Blanko-Identifikationsträger 11 in Wechselwirkung mit der Wiedergabevorrichtung gebracht. Vorliegend wird dazu der Blanko-Identifikationsträger in Form einer Karte (vgl. Figur 2) in die Wiedergabevorrichtung gesteckt. Dies kann sowohl gleichzeitig mit Schritt S2 als auch zu einem späteren Zeitpunkt erfolgen.

Beim Starten der Wiedergabe durch den Bediener werden die freigegeben Medieninhalte (=abspielbare Medieninhalte) angefordert S6. In Schritt S7 liefert das Backend die Mediendaten an das Lese-/Ausgabegerät. Die für dieses Lese-/Ausgabegerät bestimmten Medieninhalte werden in Schritt S8 abgespielt.

Ist die Verknüpfung zwischen Blanko-Identifikationsträger 11 und Datenserver einmal hergestellt, muss der Blanko-Identifikationsträger 11 nicht mehr in Wirkverbindung mit dem Datenserver stehen.

Wurde von dem Benutzer neuer digitaler Medieninhalte als Benutzer-Medieninhalte mit der Information des Blanko-Identifikationsträgers 11 verknüpft, muss der Blanko-Identifikationsträger 11 nicht erneut in Wirkverbindung mit der Wiedergabevorrichtung gebracht werden, um die freigegebenen Inhalte zu übermitteln. Die Wiedergabevorrichtung muss allerdings zur Übermittlung der neu freigegeben digitalen Medieninhalte mit dem Internet verbunden sein.

Nach einer erstmaligen Initialisierung bei der der Blanko-Identifikationsträger im Backend identifiziert und hinterlegt wurde, können von einem Benutzer somit bequem digitale Medieninhalte ausgewählt bzw. geändert werden, ohne dass eine erneute Identifikation notwendig ist. Der Blanko-Identifikationsträger muss also nicht ständig in der Wiedergabevorrichtung stecken. Die Wiedergabevorrichtung benötigt lediglich eine Verbindung zum Internet, um neu ausgewählte digitale Medieninhalte zu übertragen. Solange keine Verbindung zum Internet besteht, kann die Wiedergabevorrichtung die letzte aktuelle Auswahl abspielen.

In Figur 2 ist ein im Rahmen der Erfindung verwendbarer Blanko-Identifikationsträgers 11 in Form einer Sammelkarte in verschiedenen Ansichten gezeigt. Die angegebenen Maße und die Form sind nur als exemplarisch zu verstehen und wirken nicht beschränkend.

Der Blanko-Identifikationsträgers 11 umfasst ein Trägermaterial 12 aus Karton oder Kunststoff, auf das in einem Bereich 13 ein NFC-Chip 14 aufgeklebt ist. Beidseitig ist das Trägermaterial 12 mit bedrucktem Papier 15 beschichtet (beklebt), auf welchem Papier 15 Bilder, Text oder dgl. aufgedruckt sein können. Vorzugsweise besteht ein inhaltlicher Bezug zu den mittels des Informationsträgers 11 konsumierbaren Medieninhalten bzw. ein Blankofeld auf dem Informationen zu dem verknüpften Medium geschrieben oder geklebt werden können. Der NFC-Chip 14 speichert bzw. enthält die gespeicherte Information zur Identifizierung des Blanko-Informationsträgers und Freigabe der digitalen Medieninhalte auf dem Datenserver.

Der Blanko-Identifikationsträgers 11 in Form einer Sammelkarte wird zum Betrieb in eine Tigerbox® der Anmelderin gesteckt.

## Patentansprüche

1. Wiedergabevorrichtung für digitale Medieninhalte, umfassend:
ein Lese-/Ausgabegerät;
einen Identifikationsträger (11);
bei dem das Lese-/Ausgabegerät mit einem Datenserver verbunden oder verbindbar ist;
bei dem das Lese-/Ausgabegerät ausgebildet ist, zumindest eine auf dem Identifikationsträger (11) gespeicherte Information zu lesen und an einen Datenserver zu übermitteln, wobei abhängig von einer Überprüfung der Information eine Freigabe von digitalen Medieninhalten auf dem Datenserver erfolgt,
**dadurch gekennzeichnet,**
**dass** der Identifikationsträger (11) als Blanko-Identifikationsträger ausgebildet ist, indem durch einen Benutzer mittels Verknüpfung der zumindest einen auf dem Identifikationsträger gespeicherten Information mit auf dem Datenserver auswählbaren digitalen Medieninhalten freizugebende digitale Benutzer-Medieninhalte für die Übertragung an das Lese-/Ausgabegerät zuweisbar und/oder änderbar sind.

2. Wiedergabevorrichtung nach einem der vorangegangenen Ansprüche,
**dadurch gekennzeichnet,**
**dass** der Blanko-Informationsträger (11) einen NFC-Chip (14) aufweist, insbesondere bevorzugt, dass der Blanko-Informationsträger einen NFC-Chip (14) mit einer eindeutig zuordenbaren ID aufweist.

3. Wiedergabevorrichtung nach einem der vorangegangenen Ansprüche,
**dadurch gekennzeichnet,**
**dass** der Blanko-Informationsträger eine grafische Gestaltung passend zu den mit diesem Blanko-Informationsträger auswählbaren digitalen Medienhinhalten aufweist.

4. System für einen gesteuerten Zugriff auf digitale Medieninhalte, umfassend:
einen Datenserver;
eine Computernetz-Verbindung;
ein Lese-/Ausgabegerät;
einen Identifikationsträger (11);
bei dem der Datenserver digitale Medieninhalte bereithält;
bei dem das Lese-/Ausgabegerät über die Computernetz-Verbindung mit dem Datenserver verbunden oder verbindbar ist (S1);
bei dem das Lese-/Ausgabegerät ausgebildet ist, zumindest eine auf dem Identifikationsträger (11) gespeicherte Information zu lesen (S2),
bei dem der Datenserver ausgebildet ist, digitale Medieninhalte an das Lese-/Ausgabegerät freizugeben, wobei die Freigabe der digitalen Medieninhalte abhängig von einer Überprüfung (S4) der auf dem Identifikationsträger (11) gespeicherten Information erfolgt,
**dadurch gekennzeichnet,**
**dass** der Identifikationsträger (11) als Blanko-Identifikationsträger ausgebildet ist und anhand der ausgelesenen Information des Blanko-Identifikationsträgers (11) auf dem Datenserver eine Verknüpfung des Blanko-Identifikationsträgers (11) mit digitalen Benutzer-Medieninhalten erfolgt (S5), wobei eine Auswahl an freizugebenden digitalen Benutzer-Medieninhalten durch einen Benutzer aus den digitalen Medieninhalten auf dem Datenserver konfigurierbar und/oder änderbar ist.

5. System nach Anspruch 4,
**dadurch gekennzeichnet,**
**dass** der Datenserver ausgestaltet und eingerichtet ist, dass die freizugebenden digitalen Benutzer-Medieninhalten durch den Benutzer aus einer Vorauswahl von digitalen Medieninhalten auswählbar sind.

6. System nach einem der vorangegangenen Ansprüche 4 oder 5,
**dadurch gekennzeichnet,**
**dass** der Blanko-Identifikationsträger (11) einen NFC-Chip (14) aufweist, insbesondere bevorzugt, dass der Blanko-Identifikationsträger (11) einen NFC-Chip (14) mit einer eindeutig zuordenbaren ID aufweist.

7. System nach einem der vorangegangenen Ansprüche 4 bis 6,
**dadurch gekennzeichnet,**
**dass** der Blanko-Identifikationsträger (11) als separates Objekt, insbesondere als Karte oder Spielzeug ausgebildet ist.

8. System nach einem der vorangegangenen Ansprüche 4 bis 7,
**dadurch gekennzeichnet,**
**dass** der Blanko-Identifikationsträger (11) eine grafische Gestaltung passend zu der mit diesem Blanko-Identifikationsträger (11) auswählbaren Vorauswahl digitalen Medienhinhalten aufweist.

9. System nach einem der vorangegangenen Ansprüche 4 bis 8,
**dadurch gekennzeichnet,**
**dass** der Blanko-Identifikationsträger (11) eine zweite gespeicherte Bezahlinformation aufweist.

10. System nach einem der vorangegangenen Ansprüche 4 bis 9,
**dadurch gekennzeichnet,**
**dass** die auf dem Blanko-Identifikationsträger (11) gespeicherte Information auf dem Datenserver anfänglich bereits mit bestimmten digitalen Medieninhalten verknüpft ist, wobei der auf dem Blanko-Identifikationsträger (11) gespeicherte Information anschließend andere digitale Benutzer-Medieninhalte für die Übertragung an das Lese-/Ausgabegerät durch den Benutzer zuweisbar sind.

11. System nach einem der vorangegangenen Ansprüche 4 bis 10,
**dadurch gekennzeichnet,**
**dass** zum oder beim Ändern einer Verknüpfung des Blanko-Identifikationsträgers (11) mit digitalen Benutzer-Medieninhalten eine Zahlung durch den Benutzer erforderlich ist oder
**dass** Änderungen einer Verknüpfung des Blanko-Identifikationsträgers (11) mit digitalen Benutzer-Medieninhalten innerhalb eines Abonnement-Umfangs oder einer Vorauswahl an digitalen Medieninhalten durch den Benutzer kostenlos vernehmbar sind.

12. System zur Steuerung des Zugriffs auf digitale Medieninhalte, mittels einer Wiedergabevorrichtung mit einem Lese-/Ausgabegerät, einem Identifikationsträger (11) und einem Datenserver mit folgenden Schritten:
A Bereitstellen von digitalen Medieninhalten auf dem Datenserver;
B Verbinden des Lese-/Ausgabegerät mit dem Datenserver (S1);
C Auslesen zumindest einer auf dem Identifikationsträger (11) gespeicherten Information mittels des Lese-/Ausgabegeräts (S2);
D Freigabe von digitalen Medieninhalten abhängig von einer Überprüfung der auf dem Identifikationsträger (11) gespeicherten Information (S4);
**dadurch gekennzeichnet,**
**dass** der Identifikationsträger als Blanko-Identifikationsträger (11) ausgebildet ist, und die ausgelesene Information des Identifikationsträgers an den Datenserver übermittelt wird (S3) und auf dem Datenserver eine Verknüpfung des Blanko-Identifikationsträgers (11) mit digitalen Benutzer-Medieninhalten erfolgt (S6), welche digitalen Benutzer-Medieninhalten durch einen Benutzer auf dem Datenserver ausgewählt und/oder geändert werden.

13. System nach Anspruch 12,
**dadurch gekennzeichnet,**
**dass** die Verknüpfung des Blanko-Identifikationsträgers (11) mit digitalen Benutzer-Medieninhalten geändert wird, indem der Benutzer auf dem Datenserver neue und/oder andere digitale Benutzer-Medieninhalten auswählt.

14. Datenserver zur Speicherung, Freigabe und Verwaltung digitaler Medieninhalte für eine Wiedergabevorrichtung für digitale Medieninhalte, welcher Datenserver ausgebildet ist, digitale Medieninhalte an ein Lese-/Ausgabegerät der Wiedergabevorrichtung freizugeben, wobei die Freigabe der digitalen Medieninhalte abhängig von einer Überprüfung von einer auf einem Identifikationsträger (11) gespeicherten Information erfolgt, welche durch die Wiedergabevorrichtung übermittelt wird,
**dadurch gekennzeichnet,**
**dass** der Datenserver ausgebildet und eingerichtet ist, anhand der übermittelten Information auf dem Datenserver auswählbare digitale Medieninhalte des Datenservers für die Übertragung an die Wiedergabevorrichtung freizugeben, wobei eine Auswahl an freizugebenden digitalen Benutzer-Medieninhalten durch einen Benutzer auf dem Datenserver konfigurierbar ist.

15. Datenserver nach Anspruch 14,
**dadurch gekennzeichnet,**
**dass** der Datenserver ausgestaltet und eingerichtet ist, die durch die Wiedergabevorrichtung übermittelt auf dem Identifikationsträger (11) gespeicherte Information auf dem Datenserver zu speichern.

16. Datenserver nach Anspruch 14 oder 15,
**dadurch gekennzeichnet,**
**dass** der Datenserver ausgestaltet und eingerichtet ist, dass die freizugebenden digitalen Benutzer-Medieninhalten durch den Benutzer aus einer Vorauswahl von digitalen Medieninhalten auswählbar sind.

17. Datenserver nach Anspruch 14 bis 16,
**dadurch gekennzeichnet,**
**dass** der Datenserver ausgestaltet und eingerichtet ist, anhand der durch den Benutzer ausgewählten digitalen Benutzer-Medieninhalten weitere digitale Medieninhalte freizugeben, vorzugsweise regelmäßig, insbesondere regelmäßig und zu einer auswählbaren Tageszeit weitere digitale Medieninhalte freizugeben.

18. Datenserver nach einem der Ansprüche 14 bis 17,
**dadurch gekennzeichnet,**
**dass** der Datenserver ausgestaltet und eingerichtet ist, von einem Benutzer zur Verfügung gestellte digitale Medieninhalte als digitale Benutzer-Medieninhalte freizugeben.
